# EUROPEAN PATENT APPLICATION

(11) **EP 1 464 244 A1**
(43) Date of publication of application: **06.10.2004**
(21) Application number: 03252166.8
(22) Date of filing: 04.04.2003
(51) Int. Cl.: A44B 11/25, B64D 25/02

(54) **Fastening device capable of releasable engagement with more than one latch plate in different directions**

(71) Applicant: Ma, Pony, Wen-Shang Dist., Taipei City (TW)
(72) Inventor: Ma, Pony, Wen-Shang Dist., Taipei City (TW)
(74) Representative: Jenkins, Peter David

(57) **Abstract**

A fastening device (31) is capable of releasable engagement with a plurality of latch plates (32), and includes a first buckle member (311) and a second buckle member (312) connected to the first buckle member (311). Each of the first and second buckle members (311, 312) is formed with a respective insert slot (313, 314, 315, 316) adapted to receive one of the latch plates (32). The insert slot (316) in the second buckle member (312) extends along a slot axis, which forms an angle with respect to that of the insert slot (313, 314, 315) in the first buckle member (311). Each of the first and second buckle members (311, 312) is provided with a respective spring-loaded catch mechanism (33) in the respective insert slot (313, 314, 315, 316) forretaining removably the latch plate (32) in the respective insert slot (313, 314, 315, 316).

## Description

The invention relates to a fastening device, more particularly to a fastening device capable of releasable engagement with a plurality of latch plates.

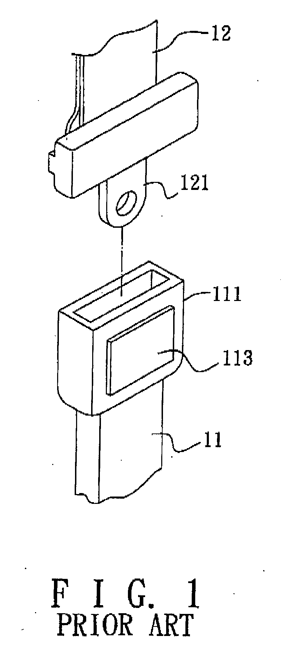

Referring to Figure 1, a conventional safety belt 1 includes a first belt segment 11, a latch fastener 111 connected to one end of the first belt segment 11, a second belt segment 12, and a latch plate 121 connected to one end of the second belt segment 12. The latch fastener 111 is provided with a catch mechanism 113, which is operable so as to disengage the latch plate 121 from the latch fastener 111. In practice, the first and second belts segments 11, 12 are anchored on opposite sides of an object, such as a person seated on a seat of a vehicle. Through the engagement between the latch fastener 111 and the latch plate 121, the object may be bound by the safety belt 1.

In the design of the safety belt 1, since the latch fastener 111 and the latch plate 121 engage each other in a fixed direction, adjustments must be made to the position of the object to be bound so as to correspond with the engaging direction. Moreover, the safety belt 1 can only be used to bind a single object, and is not suitable for binding together several objects.

Therefore, the object of the present invention is to provide a fastening device that is capable of releasable engagement with more than one latch plate in different directions so as to overcome the aforesaid drawbacks associated with the prior art.

Accordingly, the fastening device of the present invention is capable of releasable engagement with a plurality of latch plates, and includes a first buckle member and a second buckle member connected to the first buckle member. Each of the first and second buckle members is formed with a respective insert slot adapted to receive one of the latch plates. The insert slot in the second buckle member extends along a slot axis, which forms an angle with respect to that of the insert slot in the first buckle member. Each of the first and second buckle members is provided with a respective spring-loaded catch mechanism in the respective insert slot for retaining removably the latch plate in the respective insert slot.

Other features and advantages of the present invention will become apparent in the following detailed description of the preferred embodiment with reference to the accompanying drawings, of which:
Figure 1 is a fragmentary perspective view of a conventional safety belt;
Figure 2 is a schematic top view of the preferred embodiment of a fastening device according to the present invention, which is adapted to engage four latch plates in different directions;
Figure 3 is a schematic side view of the preferred embodiment;
Figure 4 is a schematic sectional view of the preferred embodiment, taken along line IV-IV in Figure 2;
Figure 5 is a view similar to Figure 4, illustrating a state where a latch plate is retained in an insert slot;
Figure 6 is a view similar to Figure 4, illustrating a state where a press member is operated to permit removal of the latch plate from the insert slot; and
Figure 7 is a perspective view to illustrate an application of the preferred embodiment.

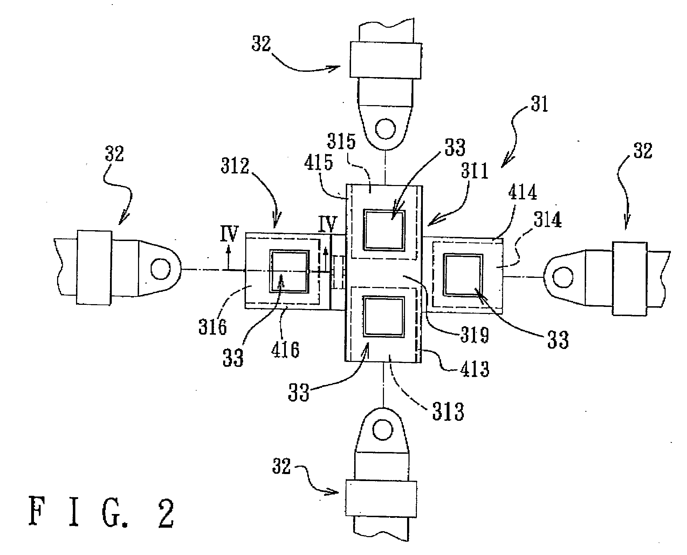

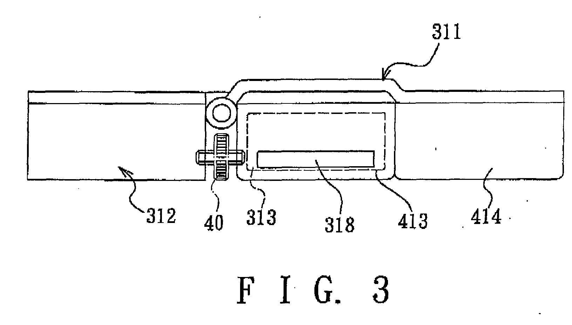

As shown in Figures 2 and 3, the preferred embodiment of a fastening device 31 according to the present invention is shown to be capable of releasable engagement with a plurality of latch plates 32 (four in this embodiment) , and includes a first buckle member 311 and a second buckle member 312 connected to the first buckle member 311. Each of the first and second buckle members 311, 312 is formed with a respective insert slot 313, 314, 315, 316 adapted to receive one of the latch plates 32. The insert slot 316 in the second buckle member 312 extends along a slot axis which forms an angle with respect to the slot axis of each of the insert slots 313, 314, 315 in the first buckle member 311.

In this embodiment, the first buckle member 311 includes three slot-confining portions 413, 414, 415, each of which confines a respective one of the insert slots 313, 314, 315 and is formed with an access opening 318 for access into the respective insert slot 313, 314, 315, and a connecting portion 319 which interconnects the slot-confining portions 413, 414, 415. The second buckle member 312 includes a slot-confining portion 416 which confines the insert slot 316 and which is similarly formed with an access opening 318. The slot axis of a first one of the insert slots 313 in the first buckle member 311 is transverse to the slot axis of the insert slot 316 in the second buckle member 312. The slot axis of a second one of the insert slots 314 in the first buckle member 311 is transverse to the slot axis of the first one of the insert slots 313 in the first buckle member 311. The slot axis of a third one of the insert slots 315 in the first buckle member 311 is transverse to the slot axes of the second one of the insert slots 314 in the first buckle member 311 and the insert slot 316 in the second buckle member 312.

The second buckle member 312 is connected pivotally to the first buckle member 311 at the connecting portion 319 such that the second buckle member 312 is pivotable relative to the first buckle member 311 about a pivot axis transverse to the slot axis of the insert slot 316 in the second buckle member 312. Preferably, a bi-directional locking component 40 is employed to retain the fastening device 31 in a state where the first and second buckle members 311, 312 lie on the same plane, as best shown in Figure 3.

Each of the first and second buckle members 311, 312 is provided with a respective spring-loaded catch mechanism 33 in the respective insert slot 313, 314, 315, 316 for retaining removably the latch plate 32 in the respective insert slot 313, 314, 315, 316. Since the catch mechanisms 33 are identical in construction, only the catch mechanism 33 in the insert slot 316 will be described in greater detail hereinafter.

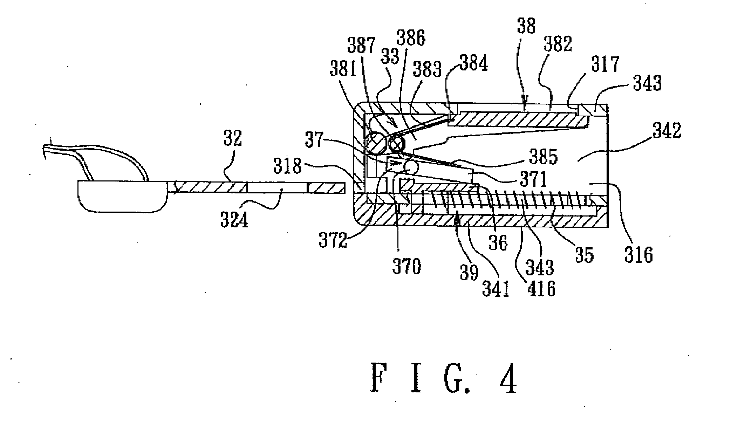

Referring to Figure 4, the slot-confining portion 416, which confines the insert slot 316, includes a bottom wall 341, a pair of opposite lateral walls 342 extending upwardly from a respective lateral side of the bottom wall 341, and a top wall 343 formed with an opening 317.

The catch mechanism 33 includes a catch member 37, a press member 38, a biasing member 383, and a biasing unit 39.

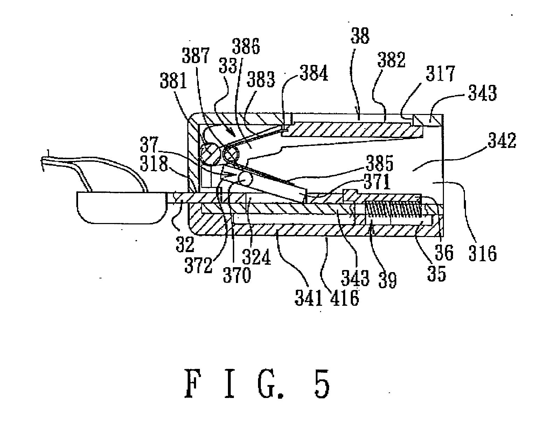

The catch member 37 is movably disposed in the insert slot 316, and has an actuating end portion 372 and an engaging end portion 371 opposite to the actuating end portion 372. In this embodiment, the catch member 37 is mounted pivotally on the lateral walls 342 in any suitable manner, such as with the use of a pair of pivot pins 370 (only one is visible) . The catch member 37 is movable from an engaging position, where the engaging end portion 371 of the catch member 37 is adapted to engage a latch hole 324 in the latch plate 32 that was extended into the insert slot 316 through the access opening 318 (see Figures 5), to a disengaging position, where the engaging end portion 371 of the catch member 37 is adapted to disengage the latch hole 324 in the latch plate 32 that was extended into the insert slot 316.

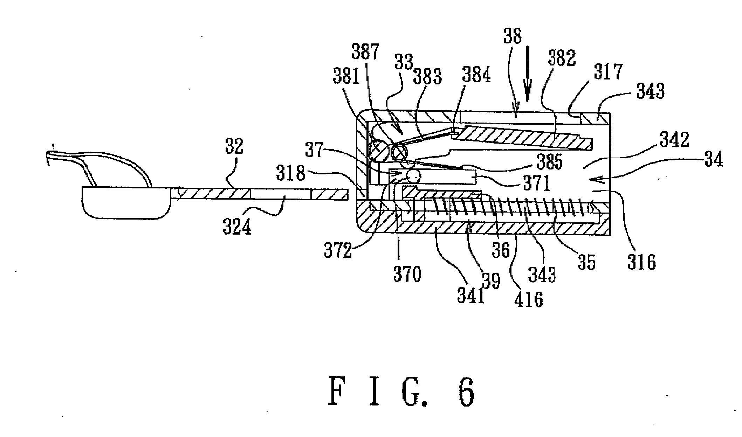

The press member 38 has a press portion 382 accessible externally of the top wall 343 of the slot-confining portion 416 through the opening 317, and a pivot portion 386 extending from the press portion 382 into the insert slot 316 and connected pivotally to the lateral walls 342 of the slot-confining portion 416 through a pivot axle 381. The pivot portion 386 is formed with an actuator 387 that abuts against the actuating end portion 372 of the catch member 37. The press portion 382 is operable to move from a normal state so as to enable the actuator 387 to press against the actuating end portion 372 for moving the catch member 37 from the engaging position to the disengaging position, as best shown in Figure 6.

The biasing member 383 has a first end 384 connected to the press portion 382 of the press member 38 and a second end 385 abutting against the catch member 37 for biasing the press portion 382 to the normal state and for biasing the catch member 37 to the engaging position.

The biasing unit 39 is disposed in the insert slot 316 and is adapted to bias the latch plate 32 in the insert slot 316 in a direction parallel to the slot axis of the insert slot 316 so as to ensure engagement between the latch plate 32 and the engaging end portion 371 of the catch member 37, as best shown in Figure 5. The biasing unit 39 includes a guide rod 343, a slide member 36, and a spring 35. The guide rod 343 is disposed on the bottom wall 341 of the slot-confining portion 416 in the insert slot 316. The slide member 36 is slidably disposed on the guide rod 343, and is disposed to abut against the latch plate 32, as best shown in Figure 5. The spring 35 is sleeved on the guide rod 343, and provides a biasing force that acts on the slide member 36 for moving the slide member 36 toward the latch plate 32.

Figures 4, 5 and 6 illustrate engaging and disengaging operations of the fastening device 31 and one of the latch plates 32. Particularly, Figure 4 illustrates the fastening device 31 in a disengaging position with respect to the corresponding latch plate 32, where the biasing member 383 and the spring 35 are both in decompressed states. Figure 5 illustrates the fastening device 31 in an engaging position with respect to the corresponding latch plate 32, where the latch plate 32 is inserted into the insert slot 313 through the access opening 318 and abuts against and pushes the slide member 36 to compress the spring 35 until the engaging end portion 371 of the catch member 37 extends into the latch hole 324 in the latch plate 32. Because the second buckle member 312 is pivotable relative to the first buckle member 311, the latch plate 32 can engage the fastening device 31 from a desired direction. Figure 6 illustrates the fastening device 31 when disengaged from the corresponding latch plate 32 by pressing the pressing portion 382 of the press member 38, where the actuator 387 presses against the actuating end portion 372 for moving the catch member 37 from the engaging position to the disengaging position, i.e., the engaging end portion 371 ceases to extend into the latch hole 324 in the latch plate 32, such that the latch plate 32 can be easily removed from the insert slot 316.

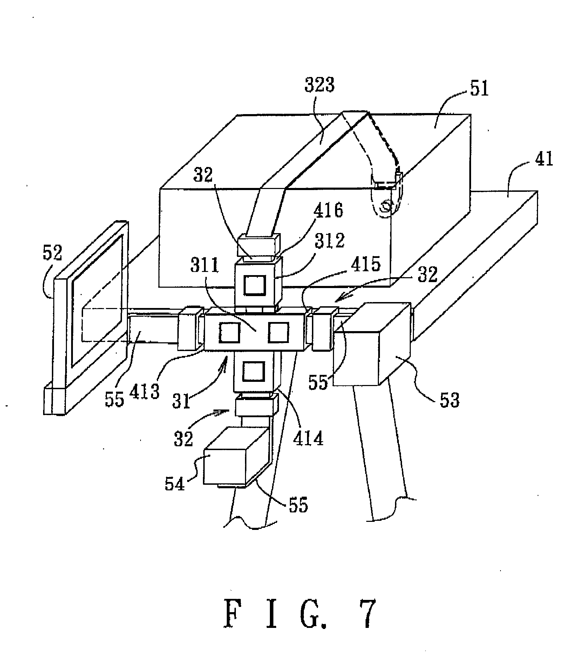

Referring to Figures 4 and 7, each latch plate 32 can be connected to one end of a belt 323 or an L-shaped bracket 55. In practice, the fastening device 31 of this embodiment can be used to secure a camera case 51, a monitor 52, and a pair of tool boxes 53, 54 on a frame 41. As illustrated, the camera case 51 is disposed on top of the frame 41. Each of the monitor 52 and the tool boxes 53, 54 is fixed to a respective bracket 55. When the fastening device 31 is mounted on one side of the frame 41, the latch plates 32 on the brackets 55 can be inserted into and retained in any one of the insert slots of the slot-confining portions 413, 414, 415 of the first buckle member 311, thereby retaining the monitor 52 and the tool boxes 53, 54 on the frame 41. Moreover, the latch plate 32 on the belt 323 can be inserted into and retained in the insert slot of the slot-confining portion 416 of the second buckle member 312. After extending the belt 323 over the camera case 51, another latch plate 32 on the other end of the belt 323 can be used to engage a similar fastening device (not shown) on the frame 41 so as to secure the camera case 51 on the frame 41.

In sum, the fastening device 31 of this invention can engage a plurality of latch plates 32 in a number of directions. Moreover, the fastening device 31 can be used to bind more than one object with relative ease.

## Claims

1. A fastening device (31) capable of releasable engagement with a plurality of latch plates (32), **characterized by** a first buckle member (311) and a second buckle member (312) connected to said first buckle member (311), each of said first and second buckle members (311, 312) being formed with a respective insert slot (313, 314, 315, 316) adapted to receive one of the latch plates (32) , said insert slot (316) in said second buckle member (312) extending along a slot axis which forms an angle with respect to that of said insert slot (313, 314, 315) in said first buckle member (311), each of said first and second buckle members (311, 312) being provided with a respective spring-loaded catch mechanism (33) in the respectiveinsertslot (313, 314, 315, 316) for retaining removably the latch plate (32) in the respective insert slot (313, 314, 315, 316).

2. The fastening device (31) as claimed in Claim 1, **characterized in that** said first buckle member (311) is formed with three of said insert slots (313, 314, 315), said first buckle member (311) including three slot-confining portions (413, 414, 415) , each of which confines a respective one of said insert slots (313, 314, 315), and a connecting portion (319) which interconnects said slot-confining portions (413, 414, 415) .

3. The fastening device (31) as claimed in Claim 2, further **characterized in that**:
the slot axis of a first one of said insert slots (313) in said first buckle member (311) is transverse to the slot axis of said insert slot (316) in said second buckle member (312),
the slot axis of a second one of said insert slots (314) in said first buckle member (311) is transverse to the slot axis of the first one of said insert slots (313) in said first buckle member (311), and
the slot axis of a third one of said insert slots (315) in said first buckle member (311) is transverse to the slot axes of the second one of said insert slots (314) in said first buckle member (311) and said insert slot (316) in said second buckle member (312).

4. The fastening device (31) as claimed in Claim 3, further **characterized in that** said second buckle member (312) is connected to said first buckle member (311) at said connecting portion (319).

5. The fastening device (31) as claimed in Claim 4, further **characterized in that** said second buckle member (312) is connected pivotally to said first buckle member (311) .

6. The fastening device (31) as claimed in Claim 1, **characterized in that** said second buckle member (312) is pivotable relative to said first buckle member (311) about a pivot axis transverse to the slot axis of said insert slot (316) in said second buckle member (312).

7. The fastening device (31) as claimed in Claim 1, **characterized in that** each of said first and second buckle members (311, 312) has a slot-confining portion (413, 414, 415, 416) that confines the respective insert slot (313, 314, 315, 316), said catch mechanism (33) of each of said first and second buckle members (311, 312) including
a catchmember (37) movably disposed in the respective insert slot (313, 314, 315, 316) and having an actuating end portion (372) and an engaging end portion (371) opposite to said actuating end portion (3 72) , said catch member (37) being movable from an engaging position, where said engaging end portion (371) of said catch member (37) is adapted to engage the latch plate (32) in the respective insert slot (313, 314, 315), to a disengaging position, where said engaging end portion (371) of said catch member (37) is adapted to disengage the latch plate (32) in the respective insert slot (313, 314, 315),
a press member (38) having a press portion (382) accessible externally of said slot-confining portion (413, 414, 415, 416) , and a pivot portion (386) extending from said press portion (382) into the respective insert slot (313, 314, 315, 316) and connected pivotally to said slot-confining portion (413, 414, 415, 416) , said pivot portion (386) being formed with an actuator (387) that abuts against said actuating end portion (372) of said catch member (37), said press portion (382) being operable to move from a normal state so as to enable said actuator (387) to press against said actuating end portion (372) for moving said catch member (37) from the engaging position to the disengaging position, and
a biasing member (383) having a first end (384) connected to said press member (38) and a second end (385) abutting against said catch member (37) for biasing said press portion (382) to the normal state and for biasing said catch member (37) to the engaging position.

8. The fastening device (31) as claimed in Claim 7, **characterized in that** said catch mechanism (33) further includes a biasing unit (39) disposed in the respective insert slot (313, 314, 315, 316) and adapted to bias the latch plate (32) in the respective insert slot (313, 314, 315, 316) in a direction parallel to the slot axis of the respective insert slot (313, 314, 315, 316) so as to ensure engagement between the latch plate (32) and said engaging end portion (371) of said catch member (37).

9. The fastening device (31) as claimed in Claim 8, **characterized in that** said biasing unit (39) includes:
a guide rod (343) disposed in the respective insert slot (313, 314, 315, 316),
a slide member (36) slidably disposed on said guide rod (343) and disposed to abut against the latch plate (32), and
a spring (35) sleeved on said guide rod (343) and providing a biasing force that acts on said slide member (36) for moving said slide member (36) toward the latch plate (32).
